Europäisches Patentamt

European Patent Office

Office européen des brevets

(19)

(11) Veröffentlichungsnummer : **0 351 737 B1**

(12) ## EUROPÄISCHE PATENTSCHRIFT

(45) Veröffentlichungstag der Patentschrift :
**09.12.92 Patentblatt 92/50**

(51) Int. Cl.$^5$ : **F16F 13/00, B60K 5/12**

(21) Anmeldenummer : **89112967.8**

(22) Anmeldetag : **14.07.89**

(54) **Hydraulisch dämpfendes Motorlager.**

(30) Priorität : **21.07.88 DE 3824878**

(43) Veröffentlichungstag der Anmeldung :
**24.01.90 Patentblatt 90/04**

(45) Bekanntmachung des Hinweises auf die
Patenterteilung :
**09.12.92 Patentblatt 92/50**

(84) Benannte Vertragsstaaten :
**DE ES FR GB IT SE**

(56) Entgegenhaltungen :
**EP-A- 0 117 139**
**EP-A- 0 133 122**
**DE-A- 3 827 124**
**DE-U- 8 623 498**

(73) Patentinhaber : **METZELER GIMETALL AG**
**Gneisenaustrasse 15**
**W-8000 München 50 (DE)**

(72) Erfinder : **Härtel, Volker,Dr.**
**Fichtenstrasse 50**
**W-8034 Germering (DE)**

(74) Vertreter : **Michelis, Theodor, Dipl.-Ing. et al**
**Seibert + Michelis Rechtsanwälte und**
**Patentanwälte Tattenbachstrasse 9**
**W-8000 München 22 (DE)**

EP 0 351 737 B1

## Beschreibung

Die Erfindung bezieht sich auf ein hydraulisch dämpfendes Motorlager mit einer Arbeitskammer, die von einer kegelmantelförmigen, elastomeren Wandung und einer stirnseitigen Lagerplatte begrenzt ist und über eine Überströmöffnung in einer die andere Stirnseite bildenden, starren Zwischenplatte mit einer Ausgleichskammer in Verbindung steht, sowie mit einem integrierten Zug- und Druckanschlag in Form eines von der innenliegenden Stirnseite der Lagerplatte in die Arbeitskammer ragenden zylindrischen Ansatzes mit einer scheibenförmigen Anschlagplatte an seinem freien Ende,*

Ein Motorlager mit einem integrierten Anschlag ist beispielsweise aus der DE-PS 34 43 618 bekannt. Dabei hat dieser Anschlag, insbesondere wenn er als ebene Scheibe ausgeführt ist, wie beispielsweise in der EP-A-0271 894, noch zusätzlich eine entkoppelnde Wirkung im Bereich hoher Frequenzen und ist damit geeignet, die Schallübertragung im hochfrequenten Bereich günstig zu beeinflussen. Diese Beeinflussung erfolgt im wesentlichen durch die Schaffung eines zusätzlichen Überströmkanal: einstellbarer Größe zwischen dem Außenumfang der Platte und der Innenwandung der Arbeitskammer, mit dem das dynamische Verhalten des Lagers beeinflußt und insbesondere die dynamische Steifigkeit über ein weites Frequenzband abgesenkt werden kann.

Darüberhinaus ist aus der DE-U 86 23 498 ein hydraulisch dämpfendes Motorlager gemäß dem Oberbegriff des Patentanspruch 1 mit einem integrierten Anschlag bekannt, wobei dieser Anschlag zusätzliche Borhungen aufweist, um Ober- und Unterseite der Anschlagplatte und damit die entsprechenden Bereiche der Arbeitskammer bei einer Bewegung miteinander zu verbinden, um damit eine zusätzliche Dämpfung der durch die Bohrungen strömenden Flüssigkeit zu bewirken. Darüberhinaus haben hier diese Bohrungen aber noch die Aufgabe, ein völliges Absperren eines Flüssigkeitsaustausches vom Ober- zum Unterteil der Arbeitskammer bei Anliegen der Anschlagplatte an einen Gegenanschlag sicher zu vermeiden.

Es hat sich aber aus Gründen der Lebensdauer als günstig erwiesen, einen solchen Anschlag nicht völlig starr auszuführen, sondern die scheibenförmige Anschlagplatte elastisch zu lagern, wie das beispielsweise in der älteren DE-A-38 08 996 beschrieben ist, wobei es insbesondere zweckäßig ist, eine kardanische Bewegung zu ermöglichen.

Ein derart elastisch aufgehängter Anschlag hat aber den Nachteil einer geringen Steifigkeit, insbesondere im hochfrequenten Bereich, was zum unerwünschten auftreten von Eigenschwingungen dieser Anschlagplatte führen kann. Darüberhinaus ist die durch die Anschlagplatte zusätzlich aufgebrachte Kraft beim Einfedern lediglich proportional zur Federsteifigkeit in der Halterung.

Der vorliegenden Erfindung liegt daher die Aufgabe zugrunde, ein Motorlager mit einem integrierten Anschlag zu schaffen, der ein weiches, aber gedämpftes Einfedern bei niedrigen Frequenzen und geringen Einfederungsgeschwindigkeiten aufweist, jedoch ein hartes und steifes Verhalten bei sehr hohen Frequenzen zeigt.

Zur Lösung dieser Aufgabe ist erfindungsgemäß vorgesehen, daß der Ansatz hohlzylindrisch und zumindest in axialer Richtung elastisch verformbar ausgebildet ist und der vom Hohlzylinder umschlossene Hohlraum mit Flüssigkeit gefüllt ist und über die zentral in der Anschlagplatte angeordnete Bohrung und einer Austrittsöffnung am oberen Ende des Hohlzylinders mit der Arbeitskammer in Verbindung steht, wobei die zentrale Bohrung und die Austrittsöffnung die Überströmbohrungen bilden.

Insbesondere durch diese Füllung des Hohlraums mit Flüssigkeit, die über die entsprechenden Bohrungen nach außen entweichen kann, ergibt sich bei niedrigen Frequenzen ein weiches Ansprechen, während bei hohen Frequenzen, bei denen die Flüssigkeit den schnellen Bewegungen nicht mehr folgen kann, eine Verhärtung auftritt, wodurch Eigenschwingungen der Anschlagplatte verhindert und ihre Tilgerwirkung verstärkt wird.

Bei einer derartigen prinzipiellen Ausgestaltung ist es einmal möglich, daß der hohlzylindrische Ansatz aus zwei konzentrischen Hohlzylindern besteht, die sich auf ihrer Länge teilweise überdecken und von denen der eine mit der Lagerplatte und der andere mit der Anschlagplatte verbunden ist, und zwischen denen im überdeckten Bereich eine Gummischicht einvulkanisiert ist.

Eine weitere Möglichkeit besteht darin, daß der hohlzylindrische Ansatz aus einem volumensteifen, jedoch druckweichen Faltenbalg besteht.

Dabei ist der Faltenbalg zweckmäßigerweise aus einem thermoplastischen Elastomer hergestellt.

Anhand einer schematischen Zeichnung sind Aufbau und Wirkungsweise von Ausführungsbeispielen nach der Erfindung näher erläutert. Dabei zeigen

Fig. 1 einen Längsschnitt durch ein Motorlager mit einer Anschlaghalterung in Form zweier konzentrischer Zylinder und

Fig. 2 ein gleichartig aufgebautes Motorlager mit einer Anschlaghalterung in Form eines Faltenbalges.

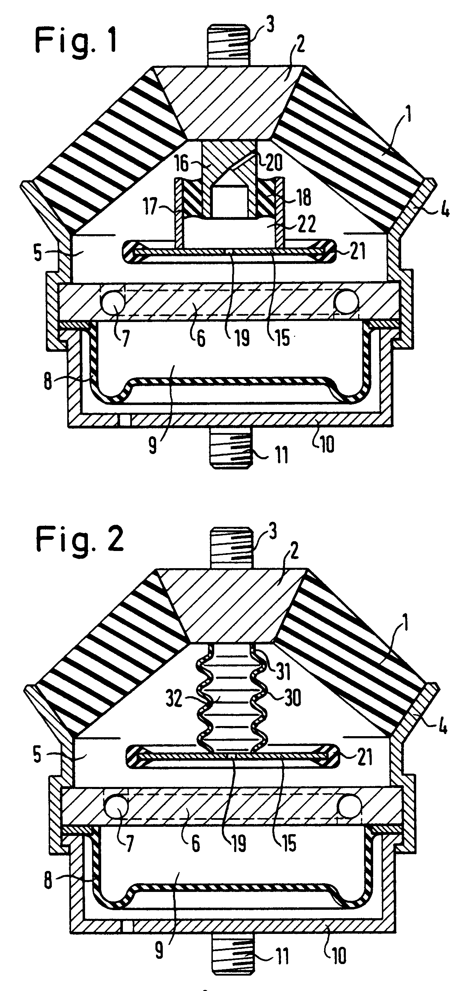

Die in Fig. 1 und 2 dargestellten hydraulisch dämpfenden Motorlager haben grundsätzlich folgenden Aufbau. Sie weisen in herkömmlicher Weise eine

*Die Überströmbohrungen zur hydraulischen Verbindung der Arbeitskammerbereiche oberhalb und unterhalb der Anschlagplatte aufweist.

kegelmantelförmige Wandung 1 aus einem gummielastischen Material auf, die an ihrer Spitze von einer metallischen Lagerplatte 2 mit einem Bolzen 3 zur Befestigung des nicht näher dargestellten Motors abgeschlossen und an ihrer Basis an einen ringförmigen Metallflansch 4 anvulkanisiert sind. Die somit gebildete Arbeitskammer 5 wird an ihrer unteren Stirnseite von einer im Metallflansch 4 gehalterten Zwischenplatte 6 mit einem Überströmkanal 7 abgeschlossen, an die sich auf der Unterseite die von einem flexiblen Balg 8 begrenzte Ausgleichskammer 9 anschließt. Über ein topfförmiges Befestigungsteil 10 kann dann das Lager über einen weiteren Bolzen 11 an der Karosserie oder an einem entsprechenden Befestigungsteil festgeschraubt werden.

Gemäß Fig. 1 ist parallel zur Zwischenplatte 6 eine kreisscheibenförmige Anschlagplatte 15 angeordnet, die elastisch an der Lagerplatte 2 abgestützt ist. Dazu ist an der innenliegenden Stirnseite der Lagerplatte 2 zunächst ein Hohlzylinder 16 befestigt, der auf einem Teil seiner Länge von einem weiteren Hohlzylinder 17 koaxial umgeben ist, der mit seiner unteren Stirnseite mit der Anschlagplatte 15 verbunden ist. Der Ringraum, über den sich die beiden Hohlzylinder 16 und 17 überdecken, ist mit einem Gummi 18 einstellbarer Härte durch Vulkanisation verbunden.

Zusätzlich weist die Anschlagplatte 15 eine zentrale Bohrung 19 auf, während das obere Ende des Hohlzylinders 16 über eine Öffnung 20 mit der Arbeitskammer 5 in Verbindung steht.

Die Anschlagplatte 15 trägt an ihrem Außenumfang noch eine Gummiwulst 21, um einen weicheren Anschlag bei einer starken Einfederung gegenüber der Zwischenplatte 6 zu erreichen. Der Durchmesser der Anschlagplatte 15 ist dabei auf die Abmessungen des Lagers so abgestimmt, daß sich der gewünschte Tilgereffekt in einem vorher bestimmten Frequenzbereich ergibt.

Der von den beiden Hohlzylindern 16 und 17 umgebene Hohlraum 22 ist jetzt durch Anordnung der Bohrungen 19 und 20 mit der Hydraulikflüssigkeit der Arbeitskammer 5 gefüllt. Dabei sind diese Bohrungen 19 und 20 so gestaltet, daß evtl. eintretende Luftblasen aus dem Hohlraum 22 über die Bohrung 20 nach oben in die Arbeitskammer 5 entweichen können, so daß damit eine unerwünschte dynamische Erweichung dieses Anschlags vermieden wird.

Bei niedrigen Frequenzen großer Amplitude wird bei einer starken Einfederung des Lagers und einem Anschlag der Platte 15 auf der Zwischenplatte 6 eine Anschlagdämpfung einmal über den einvulkanisierten Gummi 18 und zum anderen durch Ausströmen der Flüssigkeit aus dem Hohlraum 22 über die Bohrungen 19 bzw. 20 erfolgen. Bei Schwingungen hoher Frequenzen tritt jedoch eine Verhärtung dieses Anschlages auf, da dann die Flüssigkeit den hohen Geschwindigkeiten nicht mehr zu folgen vermag und damit die Bohrungen 19 und 20 hydraulisch verschlossen sind, so daß der Anschlag praktisch starr ist und damit als starrer Verdrängerkörper wirkt.

Bei dem Ausführungsbeispiel nach Fig. 2 besteht der zylindrische Ansatz zur Halterung der Anschlagplatte 15 aus einem Faltenbalg 30, der volumensteif aber druckweich ausgebildet ist. Zweckmäßigerweise wird ein solcher Faltenbalg 30 aus einem thermoplastischen Elastomer, wie beispielsweise Polyurethan oder TPE, hergestellt.

Auch hierbei sind in gleicher Weise eine Bohrung 19 in der Anschlagplatte 15 und eine Bohrung 31 am oberen Ende des Faltenbalges 30 vorgesehen.

Die Abstützung der Anschlagplatte 15 ist bei diesem Ausführungsbeispiel bei niedrigen Frequenzen großer Amplitude relativ weich, da bei entsprechender Gestaltung der Bohrungen 19 und 31 ein hinreichender Flüssigkeitsaustausch möglich ist. Bei hohen Frequenzen bzw. Strömungsgeschwindigkeiten ergibt sich jedoch hier ebenfalls eine hohe Steifigkeit wegen der Inkompressibilität der Dämpfungsflüssigkeit, die den hohen Geschwindigkeiten nicht mehr zu folgen vermag. Für niedrige Frequenzen oder Auftreffgeschwindigkeiten der Anschlagplatte 15 auf der Zwischenplatte 6 aus dem Innenraum 32 des Faltbalges 30 in die äußere umgebende Arbeitskammer 5 strömen kann. Die dagegen erreichbare hohe hydraulische Steifigkeit der Anordnung bei hohen Frequenzen erlaubt es, den bekannten Tilgereffekt solcher Anordnungen auszunutzen, mit dem dann die Gesamtsteifigkeit des Lagers im akustischen Übertragungsbereich deutlich herabgesetzt werden kann.

**Patentansprüche**

1. Hydraulisch dämpfendes Motorlager, mit einer Arbeitskammer (5), die von einer kegelmantelförmigen elastomeren Wandung (1) und einer stirnseitigen Lagerplatte (2) begrenzt ist und über eine Überströmöffnung (7) in einer die andere Stirnseite bildenden, starren Zwischenplatte (6) mit einer Ausgleichskammer (9) in Verbindung steht, sowie mit einem integrierten Zug- und Druckanschlag (16) in Form eines von der innenliegenen Stirnseite der Lagerplatte (2) in die Arbeitskammer (5) ragenden zylindrischen Ansatzes (16, 17) mit einer scheibenförmigen Anschlagplatte (15) am freien Ende, die Überströmbohrungen zur hydraulischen Verbindung der Arbeitskammerbereiche oberhalb und unterhalb der Anschlagplatte (15) aufweist, dadurch gekennzeichnet, daß der Ansatz (16, 17; 30) hohlzylindrisch und zumindest in axialer Richtung elastisch verformbar ausgebildet und der vom Hohlzylinder umschlossene Hohlraum (22; 32) mit Flüssigkeit gefüllt ist und über eine zentral in der Anschlagplatte (15) angeordnete Bohrung (19) und eine Austrittsöffnung (20; 31) am oberen Ende des Hohlzylinders (16; 30) mit der Arbeitskammer (5) in Verbindung steht, wobei die zentrale Bohrung (19) und die Austrittsöffnung (20;31) die Überströmbohrungen bilden.

2. Motorlager nach Anspruch 1, dadurch gekennzeichnet, daß der hohlzylindrische Ansatz aus zwei konzentrischen Hohlzylindern (16, 17) besteht, die sich auf ihrer Länge teilweise überdecken und von denen der eine (16) mit der Lagerplatte (2) und der andere (17) mit der Anschlagplatte (15) verbunden ist und zwischen denen im überdeckten Bereich eine Gummischicht (18) einvulkanisiert ist.

3. Motorlager nach Anspruch 1, dadurch gekennzeichnet, daß der hohlzylindrische Ansatz aus einem volumensteifen, jedoch druckweichen Faltenbalg (30) besteht.

4. Motorlager nach Anspruch 3, dadurch gekennzeichnet, daß der Faltenbalg (30) aus einem thermoplastischen Elastomer gefertigt ist.

5. Motorlager nach Anspruch 1, dadurch gekennzeichnet, daß die ebene Anschlagplatte (15) eine umlaufende Gummiwulst (21) aufweist.

## Claims

1. Hydraulically damping engine bearing having a working chamber (5), which is delimited by a cone envelope-like elastomer wall (1) and an end bearing plate (2) and communicates with a compensation chamber (9) via an overflow opening (7) in a rigid intermediate plate (6) forming the other end face, as well as having an integrated tension and compression stop (16) in the form of a cylindrical extension (16, 17), which projects from the inner-lying face of the bearing plate (2) into the working chamber (5) and has on its free end a disk-like stop plate (15), which has overflow bores for hydraulically connecting the working chamber regions above and below the stop plate (15), characterized in that the extension (16, 17; 30) takes the form of a hollow cylinder and is resiliently deformable at least in axial direction, and the hollow chamber (22; 32) enclosed by the hollow cylinder is filled with fluid and communicates via a bore (19) centrally disposed in the stop plate (15) and an outlet opening (20; 31) at the top end of the hollow cylinder (16; 30) with the working chamber (5), the central bore (19) and the outlet opening (20; 31) forming the overflow bores.

2. Engine bearing according to claim 1, characterized in that the hollow-cylindrical extension comprises two-concentric hollow cylinders (16, 17), which partially overlap one another lengthwise and of which the one (16) is connected to the bearing plate (2) and the other (17) to the stop plate (15) and in between which, in the overlap region, a rubber layer (18) is vulcanized.

3. Engine bearing according to claim 1, characterized in that the hollow-cylindrical extension comprises bellows (30) which are rigid in terms of volume but resilient in terms of pressure.

4. Engine bearing according to claim 3, characterized in that the bellows (30) are made of a thermoplastic elastomer.

5. Engine bearing according to claim 1, characterized in that the plane stop plate (15) has a circumferential rubber bead (21).

## Revendications

1. Support de moteur à amortissement hydraulique, comprenant une chambre de travail (5) délimitée par une paroi (1) élastomère à surface latérale conique et par un plateau formant support (2) du côté frontal et communiquant avec une chambre de compensation (9) par un orifice de passage (7) ménagé dans un plateau intermédiaire (6) rigide formant l'autre côté frontal, ainsi qu'une butée (16) à la poussée et à la traction intégrée sous forme d'un prolongement (16,17) cylindrique faisant saillie, du côté frontal intérieur du plateau formant support (2), dans la chambre de travail (5) et muni, à l'extrémité libre, d'un plateau de butée (15) en forme de disque qui comporte des orifices de passage pour la liaison hydraulique des parties de la chambre de travail au-dessus et en-dessous du plateau de butée (15), caractérisé en ce que le prolongement (16,17;30) est un cylindre creux et est déformable élastiquement au moins dans la direction axiale et la cavité (22;32) entourée du cylindre creux est emplie d'un liquide et communique avec la chambre de travail (5) par un orifice (19) ménagé au centre du plateau de butée (15) et par un orifice de sortie (20;31) ménagé à l'extrémité supérieure du cylindre creux (16;30), l'orifice (19) central et l'orifice de sortie (20;31) formant les orifices de passage.

2. Support de moteur suivant la revendication 1, caractérisé en ce que le prolongement cylindrique creux est constitué de deux cylindres creux et concentriques (16, 17), qui se recouvrent partiellement sur leur longueur et dont l'un (16) est relié au plateau formant support (2) et l'autre (17) au plateau de butée (15) et une couche de caoutchouc (18) est vulcanisée entre eux dans la partie à recouvrement.

3. Support de moteur suivant la revendication 1, caractérisé en ce que le prolongement cylindrique creux est constitué d'un soufflet à plis (30), rigide en volume, mais souple à la compression.

4. Support de moteur suivant la revendication 3, caractérisé en ce que le soufflet à plis (30) est fabriqué en un élastomère thermoplastique.

5. Support de moteur suivant la revendication 1, caractérisé en ce que le plateau de butée (15) plan comporte un bourrelet de caoutchouc (21) faisant tout le tour.

Fig. 1

Fig. 2